# EUROPÄISCHE PATENTSCHRIFT

(11) **EP 2 948 323 B1**
(45) Veröffentlichungstag und Bekanntmachung des Hinweises auf die Patenterteilung: **26.06.2019**
(21) Anmeldenummer: 13814042.1
(22) Anmeldetag: 19.12.2013
(51) Int. Cl.: B60G 17/015, B60G 17/018, B60G 17/0195

(54) **KRAFTFAHRZEUG**
MOTOR CAR
VOITURE AUTOMOBILE

(30) Priorität: 26.01.2013 DE 102013001305
(43) Veröffentlichungstag der Anmeldung: 02.12.2015
(73) Patentinhaber: Audi AG, 85045 Ingolstadt (DE)
(72) Erfinder: MÜLLER, Christoph, 97723 Oberthulba (DE); SIEDERSBERGER, Karl-Heinz, 86669 Königsmoos (DE)
(74) Vertreter: Reichert, Thomas Klaus
(86) Internationale Anmeldenummer: PCT/EP2013/003876
(87) Internationale Veröffentlichungsnummer: WO 2014/114319

(56) Entgegenhaltungen:
- EP-A1- 0 114 757
- EP-A2- 0 300 496
- EP-A2- 0 453 771
- EP-A2- 0 668 176
- DE-A1-102009 009 888

## Beschreibung

Die Erfindung betrifft ein Kraftfahrzeug, umfassend mehrere Aktoren zur Ausführung von Bewegungen des Fahrgestells, umfassend eine Steuereinrichtung zur Ermittlung einer eine im Hinblick auf wenigstens eine Zieleinstellung vorzunehmende Ausrichtung des Fahrgestells beschreibenden Ausrichtungsinformation, wobei die Steuereinrichtung auf Grundlage der Ausrichtungsinformation derart zur Ansteuerung der Aktoren ausgebildet ist, dass die Aktoren kombiniert Nick-, Wank- und Hubbewegungen des Fahrgestells ausführen, um das Fahrgestell entsprechend der durch die Ausrichtungsinformation beschriebenen Ausrichtung auszurichten.

Es ist bekannt, über so genannte aktive Fahrwerke bestimmte Bewegungen, d. h. z. B. Nick- oder Wank- oder Hubbewegungen, in das Fahrgestell eines Kraftfahrzeugs einzubringen. Der Zweck einer entsprechenden Bewegung des Fahrgestells kann insbesondere darin liegen, Unebenheiten des Fahrbahnbelags auszugleichen, wozu in der Regel Hubbewegungen des Fahrgestells erfolgen, oder die dynamischen Eigenschaften des Kraftfahrzeugs z. B. bei Kurvenfahrt zu verbessern, wozu in der Regel Wankbewegungen des Fahrgestells erfolgen, so dass sich Kraftfahrzeug "in die Kurve legt".

Zur Ausführung von Bewegungen des Fahrgestells umfasst das Kraftfahrzeug eine Anzahl an Aktoren. Üblicherweise wird das Fahrgestell derart in Nick- oder Wankbewegungen bezüglich der Quer- oder Längsachse des Kraftfahrzeugs oder Hubbewegungen bezüglich einer Vertikalachse des Kraftfahrzeugs versetzt.

Mithin sind derartige, auf die Ansteuerung entsprechender Aktoren zur Ausführung von Nick-, Wank- und Hubbewegungen des Fahrgestell zurückzuführender Bewegungen des Kraftfahrzeugs respektive Änderungen der Ausrichtung des Fahrgestells stets auf nur einen Freiheitsgrad begrenzt, d. h. das Fahrgestell führt entweder Nick- oder Wank- oder Hubbewegungen aus.

EP 0 114 757 A1 offenbart ein Aufhängungssystem für ein Fahrzeug. Das Aufhängungssystem weist hydraulische Stellglieder auf. Jedes Stellglied weist einen in einem Zylinder bewegbaren Kolben auf und wirkt zwischen einem auf Rädern getragenen Fahrzeugkörper und jeweiligen Rädern.

EP 0 300 496 A2 offenbart eine aktive Radaufhängung für ein Fahrzeug. Die aktive Radaufhängung ist durch eine Vielzahl von Zylinder-Kolben-Betätigungsgliedern. Jedes Zylinder-Kolben-Betätigungsglieder erzeugt eine Stützkraft zur Abstützung der Karosserie gegen jeweilige Räder.

EP 0 668 176 A2 offenbart ein Aufhängungssystem für ein Fahrzeug. Das Aufhängungssystem weist eine Anzahl an Aktuatoren zwischen einem Fährzeugaufbau und jeweiligen Rädern auf.

EP 0 453 771 A2 offenbart ein Roll-Steuerungs-System eines Fahrzeugs, das eine Mehrzahl an Aufhängungssystemen aufweist. Jedes Aufhängungssystem stützt eine Karosserie gegen ein jeweiliges Rad ab.

DE 10 2009 009 888 A1 offenbart ein Verfahren zur Regelung eines Fahrwerks eines Fahrzeugs mit einem einen ansteuerbaren Fahrwerksaktuator aufweisenden aktiven Fahrwerk, mit einer Ermittlungsdaten erzeugenden Ermittlungseinrichtung.

Der Erfindung liegt das Problem zugrunde, ein Kraftfahrzeug anzugeben, dessen Fahrgestell in Freiheitsgraden gleichzeitig bewegt werden kann.

Das Problem wird erfindungsgemäß durch ein Kraftfahrzeug gemäß Anspruch 1 gelöst.

Das erfindungsgemäße Prinzip erlaubt eine kombinierte, d. h. gleichzeitige Ausführung von Nick-, Wank- und Hubbewegungen des Fahrgestells. Mithin ist das Fahrgestell in mehr als einem, insbesondere drei unabhängigen, Freiheitsgraden bewegbar. Nickbewegungen sind definiert als Bewegungen des Fahrgestells, insbesondere Drehbewegungen, um eine Querachse des Kraftfahrzeugs, Wankbewegungen sind definiert als Bewegungen des Fahrgestells, insbesondere Drehbewegungen, um eine Längsachse des Kraftfahrzeugs, Hubbewegungen sind definiert als Bewegungen des Fahrgestells entlang einer Vertikalachse des Kraftfahrzeugs. Die Längs-, Quer- und Vertikalachse des Kraftfahrzeugs stehen orthogonal zueinander und bilden ein orthogonales Koordinatensystem, dessen Ursprung beispielsweise im Schwerpunkt des Kraftfahrzeugs liegt.

Die Ansteuerung der kraftfahrzeugseitigen Aktoren erfolgt über eine mit diesen bzw. entsprechenden, den Aktoren zugehörigen Steuereinrichtungen kommunizierende Steuereinrichtung auf Basis einer zuvor im Hinblick auf eine bestimmte Zieleinstellung des Kraftfahrzeugs ermittelten Ausrichtungsinformation. In der Steuereinrichtung können zur Ermittlung der Ausrichtungsinformation bestimmte, etwa als Gütefunktion zu bezeichnende Algorithmen hinterlegt sein, welche eine Ermittlung der Ausrichtungsinformation ermöglichen.

Die Ausrichtungsinformation beschreibt eine im Hinblick auf wenigstens eine Zieleinstellung vorzunehmende Ausrichtung des Fahrgestells. Die Ausrichtungsinformation enthält sonach sämtliche Angaben zur Ansteuerung der kraftfahrzeugseitigen Aktoren, um diese derart anzusteuern, dass diese kombiniert Nick-, Wank- und Hubbewegungen des Fahrgestells ausführen, um das Fahrgestell entsprechend der durch die Ausrichtungsinformation beschriebenen Ausrichtung des Fahrgestells auszurichten.

Die Anteile der durch die Ausrichtungsinformation abgebildeten durchzuführenden Nick-, Wank- und Hubbewegungen des Fahrgestells sind ausgehend von einer bestimmten Ist-Ausrichtung des Fahrgestells in der Regel unterschiedlich, um das Fahrgestell im Hinblick auf die vorgegebene oder vorgebbare Zieleinstellung, welche einer Soll-Ausrichtung des Fahrgestells gleichzusetzen ist, auszurichten.

Grundsätzlich ist es nicht zwingend erforderlich, stets alle Aktoren zur Ausführung von Nick-, Wank- und Hubbewegungen des Fahrgestells anzusteuern, um das Fahrgestell im Hinblick auf eine bestimmte Zieleinstellung auszurichten, vielmehr kann für die durchzuführende kombinierte Ausführung von Nick-, Wank- und Hubbewegungen des Fahrgestells gegebenenfalls nur eine Ansteuerung einzelner Aktoren ausreichen.

Als Zieleinstellung kann eine die Fahreigenschaften des Kraftfahrzeugs beeinflussende Einstellung des Fahrgestells dienen, gemäß welcher das Fahrgestell beispielsweise stets derart auszurichten ist, dass ein unter gegebenen Fahrsituationen größtmöglicher Komfort für die innerhalb des Kraftfahrzeugs befindlichen Fahrzeuginsassen gegeben ist. Die Zieleinstellung kann als Soll-Ausrichtung des Fahrgestells bezeichnet werden. Die durch die Zieleinstellung beschriebene Ausrichtung des Fahrgestells ist insbesondere derart, dass auf die Fahrzeuginsassen unter den Ist-Fahrbedingungen des Kraftfahrzeugs keine oder zumindest verminderte Längs- und Querkräfte wirken.

Erfindungsgemäß werden durch eine aktive Ansteuerung entsprechender Aktoren definiert Bewegungen und/oder Neigungen in das Fahrgestell eingebracht, um aktiv eine gezielte Verschiebung der fahrtbedingt auftretenden Drehachse(n), d. h. z. B. Nick- und/oder Wankachsen, derart zu bewirken, dass die auf die Fahrzeuginsassen fahrtbedingt wirkenden Längs- und/oder Querkräfte ausgeglichen werden.

Beispielsweise kann sonach ausgehend von einer gegebenen Fahrsituation des Kraftfahrzeugs und einer dabei gegebenen Ist-Ausrichtung des Fahrgestells eine Änderung der Ausrichtung des Fahrgestells angezeigt sein, um den Fahrkomfort für die Fahrzeuginsassen durch eine Reduzierung oder Kompensation der auf die Fahrzeuginsassen wirkenden Längs- und Querkräfte zu erhöhen. Welche Neuausrichtung des Fahrgestells zu der Erhöhung des Fahrkomforts unter den gegeben Bedingungen führt, wird durch die ermittelte Ausrichtungsinformation abgebildet. Die Ausrichtungsinformation beschreibt unter Berücksichtigung der Zieleinstellung des Fahrgestells, über welche eine entsprechende, auf einer Reduzierung oder Kompensation der auf die Fahrzeuginsassen wirkenden Längs- und Querkräfte beruhende Erhöhung des Fahrkomforts für die Fahrzeuginsassen zu erwarten ist, eine ausgehend von der Ist-Ausrichtung des Fahrgestells vorzunehmende Änderung der Ausrichtung des Fahrgestells, um eine der Zieleinstellung entsprechende Soll-Ausrichtung des Fahrgestells zu realisieren.

Die Änderung der Ausrichtung des Fahrgestells erfolgt sonach auf Grundlage der Ausrichtungsinformation. D. h. die Steuereinrichtung ermittelt auf Grundlage der Ausrichtungsinformation entsprechende Steuerbefehle an die Aktoren zur Ausführung von Nick-, Wank- und Hubbewegungen des Fahrgestells, um das Fahrgestell entsprechend der durch die Ausrichtungsinformation beschriebenen Ausrichtung auszurichten. Die Aktoren werden also auf Basis der Ausrichtungsinformation derart angesteuert, dass das Fahrgestell von der Ist-Ausrichtung in eine Soll-Ausrichtung bewegt bzw. ausgerichtet wird. Durch eine Ansteuerung der Aktoren kann demnach eine virtuelle Verschiebung der Achsen, d. h. z. B. einer Nick- und/oder Wankachse, um die sich das Kraftfahrzeug bedingt durch die Ist-Fahrsituation drehen würde, realisiert werden. Das Fahrgestell dreht sich in der Folge um die verschobene(n) Drehachse(n), wobei fahrtbedingt auf die Fahrzeuginsassen wirkende Längs- und/oder Querkräfte aufgehoben sind.

Insbesondere beschreibt die Ausrichtungsinformation eine Trajektorie, um die das Fahrgestell bewegt werden muss, um die vorzunehmende Ausrichtung einzunehmen, sowie Nick-, Wank und Hubbewegungen um die Trajektorie betreffende Steuerbefehle an die Aktoren, welche notwendig sind, um das Fahrgestell um die Trajektorie in die vorzunehmende Ausrichtung zu bewegen. Die Trajektorie, welche auch als Soll-Achse bezeichnet werden kann, bildet dabei eine insbesondere dreidimensionale Raumachse oder Raumkurve ab, welche z. B. durch das Fahrgestell verläuft, jedoch grundsätzlich auch außerhalb des Fahrgestells liegen kann.

Die Trajektorie bildet sodann für die einzelnen durchzuführenden Bewegungskomponenten des Fahrgestells entsprechende Achsen für die auf Basis der Ausrichtungsinformation vorzunehmenden kombinierten Nick-, Wank- und Hubbewegungen des Fahrgestells ab. Hierfür enthält die Ausrichtungsinformation entsprechende Steuerbefehle an die Aktoren zur Ausführung von Nick-, Wank und Hubbewegungen des Fahrgestells, welche notwendig sind, um das Fahrgestell um die Trajektorie in die vorzunehmende, der Zieleinstellung des Fahrgestells entsprechende Ausrichtung zu bewegen. Wie erwähnt, ist es nicht zwingend erforderlich, stets alle Aktoren zur Ausführung von Nick-, Wank- und Hubbewegungen des Fahrgestells anzusteuern, um das Fahrgestell im Hinblick auf eine bestimmte Zieleinstellung auszurichten, vielmehr können für die durchzuführende kombinierte Ausführung von Nick-, Wank- und Hubbewegungen des Fahrgestells gegebenenfalls nur eine Ansteuerung einzelner Aktoren ausreichen.

Vorteilhaft ist die Steuereinrichtung dazu ausgebildet, in die Ermittlung der Ausrichtungsinformation eine Ist-Ausrichtung des Fahrgestells einzubeziehen. Die Ist-Ausrichtung des Fahrgestells kann sonach als eine zu berücksichtigende Randbedingung im Rahmen der Ermittlung der Ausrichtungsinformation dienen. Bei der Ermittlung der Ausrichtungsinformation ist es demnach, wie erwähnt, möglich, eine Ist-Ausrichtung des Fahrgestells zu berücksichtigen. Die Ist-Ausrichtung des Fahrgestells kann dabei z. B. beschreiben, um welchen Wert (z. B. prozentual oder winkelmäßig) sich das Fahrgestell in Bezug auf einen Referenzwert, der z. B. die Ausrichtung des Fahrgestells bei stehendem Kraftfahrzeug auf horizontalem bzw. ebenem Untergrund beschreibt, geändert hat. So ist z. B. bei einer Bergauffahrt damit zu rechnen, dass die Ist-Ausrichtung des Fahrgestells im Vergleich zu dem Referenzwert zumindest eine Nickbewegung nach hinten enthält, da sich das Kraftfahrzeug bei Bergauffahrt in der Regel im Bereich des Hecks absenkt. Im Hinblick auf eine den Fahrkomfort erhöhende Zieleinstellung des Fahrgestells ist es bei einer Bergauffahrt beispielsweise möglich die Aktoren zur Ausführung von Nick-, Wank- und Hubbewegungen des Fahrgestells auf Basis der Ausrichtungsinformation derart anzusteuern, dass diese die Ist-Ausrichtung des Fahrgestells während der Bergauffahrt kompensieren, d. h. eine Nickbewegung des Fahrgestells nach vorne bedingen. Umgekehrtes gilt für eine Bergabfahrt.

Ferner kann die Steuereinrichtung dazu ausgebildet sein, in die Ermittlung der Ausrichtungsinformation weitere, insbesondere die Fahreigenschaften betreffende, Betriebsparameter des Kraftfahrzeugs, wie z. B. Ist-Beschleunigungswerte des Kraftfahrzeugs, insbesondere in Längs-, Quer- oder Hubrichtung, Lenkradwinkel oder Gierwinkel mit einzubeziehen. Auch die genannten Betriebsparameter des Kraftfahrzeugs können als Randbedingungen bezeichnet werden. Beispielsweise ist es derart möglich, im Rahmen einer Kurvenfahrt vorgenommene Lenkbewegungen mit in die Ermittlung der Ausrichtungsinformation einzubeziehen. Die durch die Ausrichtungsinformation abgebildete Trajektorie wird in dieser Situation beispielsweise unter Berücksichtigung der Lenkbewegung sowie gegebenenfalls weiterer damit in Zusammenhang stehender Betriebsparameter des Kraftfahrzeugs, wie z. B. Querbeschleunigung oder Gierwinkel, ermittelt. Entsprechende Betriebsparameter des Kraftfahrzeugs können über geeignete, mit der Steuereinrichtung kommunizierende Sensoriken erfasst werden. Die in die Ermittlung der Ausrichtungsinformation miteinbezogenen Betriebsparameter des Kraftfahrzeugs können gegebenenfalls gegeneinander gewichtet werden, so dass bestimmte Betriebsparameter im Rahmen der Ermittlung der Ausrichtungsinformation mehr Einfluss nehmen als Andere.

Sofern das Kraftfahrzeug auf ein voraus liegendes Hindernis bewegt und entsprechend verzögert wird, können bei der Ermittlung der Ausrichtungsinformation aktuell gegebene Verzögerungswerte in Längsrichtung des Kraftfahrzeugs, d. h. negative Beschleunigungswerte in Längsrichtung des Kraftfahrzeugs, berücksichtigt werden.

Die Aktoren sind zur Ansteuerung von Vorrichtungen zur Höhenverstellung des Fahrgestells, wenigstens eines Antriebsaggregats, wenigstens einer Bremsvorrichtung, wenigstens einer Lenkeinrichtung, wenigstens eines Fahrerassistenzsystems zur Längs- und/oder Querführung ausgebildet. Vorrichtungen zur Höhenverstellung von Fahrgestellen sind bekannt und werden beispielsweise als "aktives Fahrwerk" bezeichnet. Über entsprechende Vorrichtungen zur Höhenverstellung des Fahrgestells ist es beispielsweise möglich, den Federfußpunkt eines einen Teil einer Radaufhängung bildenden, auch als Stoßdämpfer bezeichneten Federdämpferelements zu verändern. Über eine gezielte Einstellung z. B. des Federfußpunktes eines oder mehrerer Federdämpferelemente können gezielt Nick-, Wank- oder Hubbewegungen in das Fahrgestell eingebracht werden, je nachdem, an welchem Federdämpferelement eine entsprechende Federfußpunktverstellung erfolgt.

Durch eine gezielte Ansteuerung des Antriebsaggregats, z. B. durch Beschleunigungs- oder Verzögerungsvorgänge, kann eine virtuelle Verschiebung der Achsen, d. h. insbesondere einer Nickachse, um die sich das Kraftfahrzeug bedingt durch die Ist-Fahrsituation drehen würde, erreicht werden. Erfolgt z. B. eine Beschleunigung des Kraftfahrzeugs erfolgt in der Regel eine Nickbewegung des Fahrgestells, wobei sich das Heck des Kraftfahrzeugs absenkt. Umgekehrt können durch die Ansteuerung von Bremsvorrichtungen bedingte Verzögerungen des Kraftfahrzeugs zu einem Absenken der Front des Kraftfahrzeugs und somit zu entgegen gesetzt gerichteten Nickbewegungen des Fahrgestells führen.

Sämtliche auf Basis der Ausrichtungsinformation durchgeführten Beschleunigungs- oder Verzögerungsvorgänge des Kraftfahrzeugs erfolgen vorzugsweise derart, dass diese für den oder die Fahrzeuginsassen sowie gegebenenfalls weitere Verkehrsteilnehmer, wie z. B. nachfolgende Kraftfahrzeuge, nicht oder nur geringfügig spürbar sind.

Die vorstehend beschriebene virtuelle Verschiebung einer Wankachse des Fahrgestells kann beispielsweise durch gezielte, autonome, d. h. unabhängig von dem Fahrzeugführer vorgenommene, Lenkeingriffe erfolgen, wie sie z. B. für Fahrerassistenzsysteme, welche eine automatisierte Querführung eines Kraftfahrzeugs erlauben oder eine solche unterstützen, bekannt sind.

Daneben betrifft die Erfindung ein Verfahren nach Anspruch 7 zur kombinierten Ausführung von Nick-, Wank- und Hubbewegungen eines Fahrgestells eines Kraftfahrzeugs. Gemäß dem Verfahren wird eine im Hinblick auf wenigstens eine Zieleinstellung vorzunehmende Ausrichtung des Fahrgestells beschreibende Ausrichtungsinformation ermittelt. Auf Grundlage der Ausrichtungsinformation werden Aktoren zur Ausführung von Nick-, Wank- und Hubbewegungen des Fahrgestells derart angesteuert, dass die Aktoren kombiniert Nick-, Wank- und Hubbewegungen des Fahrgestells ausführen, um das Fahrgestell entsprechend der durch die Ausrichtungsinformation beschriebenen Ausrichtung auszurichten. Durch die auf der Ausrichtungsinformation beruhende Ansteuerung der Aktoren kann eine virtuelle Verschiebung der bedingt durch die Ist-Fahrsituation des Kraftfahrzeugs auftretenden Drehachsen erfolgen. So kann etwa über einen aktorenmäßig gezielten Bremseingriff und/oder Lenkeingriff eine virtuelle Verschiebung der Nick- und/oder Wankachse des Fahrgestells des Kraftfahrzeugs realisiert werden, um eine Kompensation oder zumindest eine Reduzierung der fahrtbedingt auf die Fahrzeuginsassen wirkenden Längs- und/oder Querkräfte herbeizuführen. Hierbei ist es denkbar, die auf die Fahrzeuginsassen wirkenden Längs- und/oder Querkräfte anteilsmäßig, d. h. z. B. nur einen bestimmten Anteil der auf die Fahrzeuginsassen wirkenden Längs- und/oder Querkräfte, zu reduzieren. Die Reduzierung der auf die Fahrzeuginsassen wirkenden Längs- und Querkräfte muss dabei anteilsmäßig nicht gleich sein, so dass z. B. die auf die Fahrzeuginsassen wirkenden Längskräfte stärker reduziert werden als die auf die Fahrzeuginsassen wirkenden Querkräfte oder umgekehrt. Gegebenenfalls ist auch eine Verstärkung der auf die Fahrzeuginsassen fahrtbedingt wirkenden Längs- und/oder Querkräfte denkbar.

Das erfindungsgemäße Verfahren kann unabhängig von bzw. parallel zu weiteren, gegebenenfalls einzelne Nick-, Wank- oder Hubbewegungen des Fahrgestells beeinflussenden Fahrerassistenzsystemen, wie z. B. einem Fahrerassistenzsystem zum Ausgleich von Unebenheiten des Fahrbahnbelags , durchgeführt werden.

Grundsätzlich gelten sämtliche im Zusammenhang mit dem erfindungsgemäßen Kraftfahrzeug stehenden Ausführungen analog für das erfindungsgemäße Verfahren.

So ist es zweckmäßig, dass die ermittelte Ausrichtungsinformation eine Trajektorie, um die das Fahrgestell bewegt werden muss, um die vorzunehmende Ausrichtung einzunehmen, sowie Nick-, Wank und Hubbewegungen um die Achse betreffende Steuerbefehle an die Aktoren, welche notwendig sind, um das Fahrgestell um die Achse in die vorzunehmende Ausrichtung zu bewegen, beschreibt.

Vorteilhaft werden in die Ermittlung der Ausrichtungsinformation eine Reihe von, gegebenenfalls auch als Randbedingungen zu bezeichnende, Eingangsparameter miteinbezogen. Hierzu zählt beispielsweise eine Ist-Ausrichtung des Fahrgestells. Es ist ferner denkbar, zusätzlich oder alternativ in die Ermittlung der Ausrichtungsinformation Ist-Beschleunigungswerte des Kraftfahrzeugs, insbesondere in Längs-, Quer- oder Hubrichtung, Lenkradwinkel sowie Gierwinkel einzubeziehen.

Die Ausrichtungsinformation wird im Rahmen des erfindungsgemäßen Verfahrens zur Ansteuerung entsprechender Aktoren zur Ausführung von Nick-, Wank- oder Hubbewegungen des Fahrgestells, d. h. zur Ansteuerung von Aktoren, die geeignet sind, in das Fahrgestell Nick-, Wank- oder Hubbewegungen zu induzieren, um eine virtuelle Verschiebung der bedingt durch die Ist-Fahrsituation gegebenen Drehachsen, d. h. insbesondere Nick- und/oder Wankachsen, mit der Zielrichtung die auf die Fahrzeuginsassen fahrtbedingt wirkenden Längs- und/oder Querkräfte auszugleichen bzw. zumindest zu reduzieren, herbeizuführen, verwendet. Verwendete Aktoren sind dabei z. B. Aktoren zur Höhenverstellung des Fahrgestells oder Vorrichtungen zur Höhenverstellung des Fahrgestells, Aktoren zur Ansteuerung wenigstens eines Antriebsaggregats, Aktoren zur Ansteuerung wenigstens einer Bremsvorrichtung, Aktoren zur Ansteuerung wenigstens einer Lenkeinrichtung, sowie Aktoren zur Ansteuerung wenigstens eines Fahrerassistenzsystems zur Längs- und/oder Querführung des Kraftfahrzeugs.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer Aufsicht auf ein Kraftfahrzeug gemäß einer beispielhaften Ausführungsform der Erfindung; und
- Fig. 2- 5: jeweils schematische Darstellungen eines Kraftfahrzeugs gemäß einer beispielhaften Ausführungsform der Erfindung;

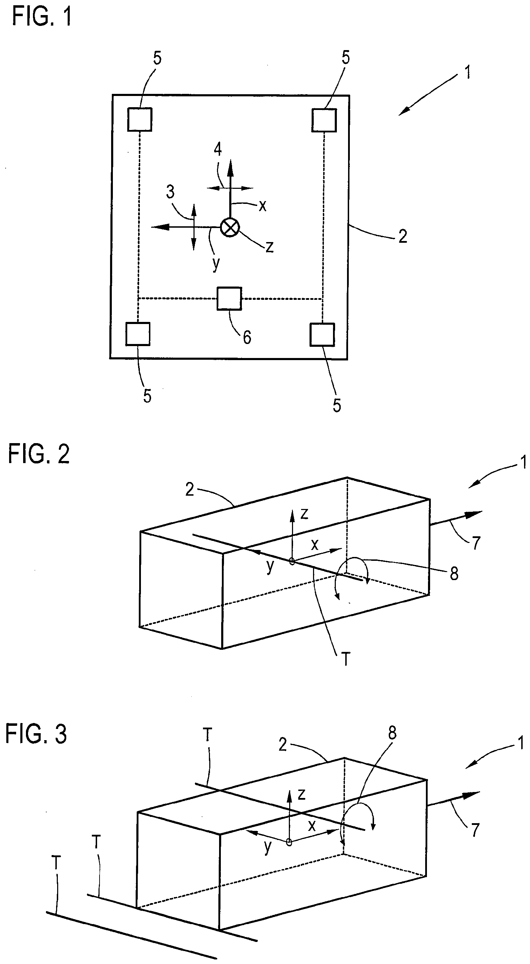

Fig. 1 zeigt eine Prinzipdarstellung einer Aufsicht auf ein Kraftfahrzeug 1 gemäß einer beispielhaften Ausführungsform der Erfindung. Fig. 1 dient insbesondere dazu, zu definieren, über welche Freiheitsgrade das Fahrgestell 2 des Kraftfahrzeugs 1 mittels der Ausführung von kombinierten Nick-, Wank- und Hubbewegungen bewegbar ist.

Hierzu ist in Fig. 1 ein orthogonales Koordinatensystem eingezeichnet, dessen x-Achse sich in Richtung der Längsachse des Kraftfahrzeugs 1 erstreckt, dessen y-Achse sich in Richtung der Querachse des Kraftfahrzeugs 1 und dessen z-Achse sich in der Zeichnungsebene des Kraftfahrzeugs 1 erstreckt. Das Zentrum des Koordinatensystems liegt im Schwerpunkt des Kraftfahrzeugs 1. Nickbewegungen des Kraftfahrzeugs 1 erfolgen durch Drehungen des Fahrgestells 2 um die y-Achse (vgl. Doppelpfeil 3), Wankbewegungen des Kraftfahrzeugs 1 erfolgen durch Drehbewegungen des Fahrgestells 2 um die x-Achse (vgl. Doppelpfeil 4) und Hubbewegungen des Fahrgestells 2 erfolgen durch Translationsbewegungen des Fahrgestells 2 entlang der z-Achse.

Zur Durchführung kombinierter Nick-, Wank- und Hubbewegungen des Fahrgestells 2 verfügt das Kraftfahrzeug 1 über geeignete Aktoren 5. Entsprechende Aktoren 5 zur Ausführung von Nick- Wank- und Hubbewegungen sind z. B. Aktoren oder Vorrichtungen zur Quer- und/oder Höhenverstellung des Fahrgestells 2 als Teil eines "aktiven Fahrwerks" mittels welchen es möglich ist, den Federfußpunkt eines einen Teil einer Radaufhängung bildenden, als Stoßdämpfer bezeichneten Federdämpferelements zu verändern. Über eine gezielte Einstellung z. B. des Federfußpunktes eines oder mehrerer Federdämpferelemente können gezielt Nick-, Wank- oder Hubbewegungen in das Fahrgestell 2 eingebracht werden, je nachdem, an welchem Federdämpferelement eine entsprechende Federfußpunktverstellung erfolgt.

Entsprechende Aktoren 5 zur Ausbildung von Nickbewegungen des Fahrgestells 2 sind z. B. solche, die zur Ansteuerung eines Antriebsaggregats des Kraftfahrzeugs 1 und/oder von Bremsvorrichtungen des Kraftfahrzeugs 1 ausgebildet sind. Durch eine gezielte Ansteuerung des Antriebsaggregats kann z. B. eine gezielte (virtuelle) Verschiebung einer durch die gegebene Ist-Fahrsituation gegebenen Nickachse, um die sich das Fahrgestell 2 fahrtbedingt drehbewegt, in x- und/oder z-Richtung erreicht werden. Umgekehrt erfolgt durch eine gezielte Ansteuerung der kraftfahrzeugseitigen Bremsvorrichtungen im Fahrbetrieb des Kraftfahrzeugs 1 eine negative Beschleunigung (Verzögerung) des Kraftfahrzeugs 1, bei der sich ebenso eine gezielte (virtuelle) Verschiebung einer durch die gegebene Ist-Fahrsituation gegebenen Nickachse, um die sich das Fahrgestell 2 fahrtbedingt drehbewegt, in x- und/oder z-Richtung erreichen lässt. Hierfür ist eine kombinierte Ansteuerung entsprechender Aktoren 5 als Teil eines so genannten "aktiven Fahrwerks", d.h. Aktoren 5, welche eine Höhenverstellung im Bereich einzelner Radaufhängungen des Kraftfahrzeugs 1 erforderlich. Die (virtuelle) Verschiebung der durch die Ist-Fahrsituation gegebenen Nick-Achse erfolgt also in Kombination mit Nick-Wank-Hubbewegungen des "aktiven Fahrwerks".

Durch eine gezielte individuelle Ansteuerung von mehreren über das Kraftfahrzeug 1 verteilt angeordneter Antriebsaggregate, welche z. B. jeweils zum Antrieb eines bestimmten Fahrzeugrads vorgesehen sind, und/oder Bremsvorrichtungen, welche z. B. jeweils zum Abbremsen eines bestimmten Fahrzeugrads vorgesehen sind, können über die Aktoren 5 zur Ansteuerung der Antriebsaggregate bzw. der Bremsvorrichtungen des Kraftfahrzeugs 1 sowohl eine (virtuelle) Verschiebung von Nick- als auch Wankachsen realisiert werden.

Weitere Aktoren 5 zur Ausführung von Nick-, Wank- oder Hubbewegungen des Fahrgestells 2 und somit zur Realisierung der vorgenannten (virtuellen) Verschiebung entsprechender Drehachsen, um die sich das Fahrgestell 2 fahrtbedingt drehbewegt, sind Aktoren zur Ansteuerung einer mit wenigstens einer lenkbaren Achse des Kraftfahrzeugs 1 zusammenwirkenden Lenkeinrichtung oder zur Ansteuerung von Fahrerassistenzsystemen zur Längs- und/oder Querführung des Kraftfahrzeugs 1.

Die Ansteuerung der Aktoren 5, welche grundsätzlich einzeln, gruppenweise oder gleichzeitig ansteuerbar sind, erfolgt über eine mit den Aktoren 5 über geeignete Kommunikationsverbindungen, wie z. B. einen zentralen Fahrzeugbus (CAN-Bus), kommunizierende Steuereinrichtung 6.

Die Ansteuerung der Aktoren 5 über die Steuereinrichtung 6 erfolgt auf Basis einer von der Steuereinrichtung 6 ermittelten Ausrichtungsinformation. Die Ausrichtungsinformation beschreibt eine im Hinblick auf eine einer Soll-Ausrichtung des Fahrgestells 2 entsprechende Zieleinstellung bzw. Zielkonfiguration des Fahrgestells 2 vorzunehmende Ausrichtung des Fahrgestells 2 ausgehend von dessen Ist-Ausrichtung. Die Ausrichtungsinformation beschreibt also, wie und welche Aktoren 5 angesteuert werden müssen, um das Fahrgestell 2 ausgehend von seiner Ist-Ausrichtung über die auf einer kombinierten Ansteuerung entsprechender Aktoren 5 beruhende (virtuelle) Verschiebung entsprechender Drehachsen, wie z. B. Nick- und/oder Wankachsen, in die durch die Zieleinstellung definierte Soll-Ausrichtung zu bringen. Die bei der Ermittlung der Ausrichtungsinformation berücksichtigte bzw. einbezogene Zieleinstellung beschreibt z. B. eine eine Erhöhung des Fahrzeuginsassenkomforts unter den Ist-Betriebsbedingungen des Kraftfahrzeugs 1 betreffende Ausrichtung des Fahrgestells 2.

Die Komforterhöhung für die Fahrzeuginsassen wird dadurch erreicht, dass auf diese während der Fahrt wirkende Längs- und/oder Querkräfte ausgeglichen oder zumindest reduziert werden. Mithin werden die Aktoren 5 über die Steuereinrichtung 6 auf Grundlage der Ausrichtungsinformation derart angesteuert, dass die Aktoren 5 während der Fahrt auf die Fahrzeuginsassen wirkende Längs- und/oder Querkräfte ausgleichen oder zumindest reduzieren. Die Reduzierung der auf die Fahrzeuginsassen wirkenden Längs- und Querkräfte muss dabei anteilsmäßig nicht zwingend gleich sein, so dass z. B. die auf die Fahrzeuginsassen wirkenden Längskräfte stärker reduziert werden als die auf die Fahrzeuginsassen wirkenden Querkräfte oder umgekehrt.

Die Ausrichtungsinformation beschreibt einerseits eine Trajektorie T oder eine Achse, um die das Fahrgestell 2 bewegt werden muss, um die vorzunehmende Ausrichtung einzunehmen, um zur Zieleinstellung zu gelangen. Andererseits beschreibt die Ausrichtungsinformation kombinierte Nick-, Wank- und Hubbewegungen um die Trajektorie T betreffende Steuerbefehle an die Aktoren 5, welche notwendig sind, um das Fahrgestell 2 aktiv um die Trajektorie T in die vorzunehmende Ausrichtung, d. h. von seiner Ist-Ausrichtung in die Soll-Ausrichtung, zu bewegen.

In die Ermittlung der Ausrichtungsinformation bezieht die Steuereinrichtung 6 neben der genannten Ist-Ausrichtung des Fahrgestells 2 auch aktuelle Betriebsbedingungen des Kraftfahrzeugs 1, wie z. B. über geeignete Sensoren erfasste Ist-Beschleunigungswerte des Kraftfahrzeugs 1, insbesondere in Längs-, Quer- oder Hubrichtung, Ist-Lenkradwinkel, Ist-Radwinkel eines oder mehrer Fahrzeugräder sowie Ist-Gierwinkel des Kraftfahrzeugs 1, ein.

Im Weiteren wird das erfindungsgemäße Prinzip an einer beispielhaften Fährsituation beschrieben, in welcher sich das Kraftfahrzeug 1 entlang einer Kurve einer Straße auf ein Stoppschild, eine Ampel oder ein sonstiges Hindernis zu bewegt, welches Hindernis ein Abbremsen des Kraftfahrzeugs 1 verlangt (vgl. hierzu auch Fig. 2 - 5 samt zugehöriger Beschreibung).

Bedingt durch die Erkennung des Stoppschilds erfolgt ein Abbremsen des Kraftfahrzeugs 1 z. B. durch den Fahrer oder ein kraftfahrzeugseitiges Längsführungssystem. Die durch das Abbremsen bzw. Verzögern des Kraftfahrzeugs 1 in das Fahrgestell 2 induzierte Nickbewegung soll hier überkompensiert werden, wie auch die durch die Kurvenfahrt bedingte geneigte Ausrichtung des Fahrgestells 2. Die über die Steuereinrichtung 6 ermittelte Ausrichtungsinformation beschreibt sonach eine Trajektorie T, um die das Fahrgestell 2 bewegt werden muss, um die die durch die Ausrichtungsinformation beschriebene Soll-Ausrichtung des Fahrgestells 2 zu erhalten. Die Soll-Einstellung kann hier einer bezogen auf eine horizontale Ebene geneigten Ausrichtung des Fahrgestells 2 gleichkommen, um die durch das Abbremsen bzw. die Kurvenfahrt bedingten Nick- und Wankbewegungen des Fahrgestells 2 überzukompensieren und derart die auf die Fahrzeuginsassen fahrbedingt wirkenden Längskräfte auszugleichen und so den Fahrzeuginsassenkomfort zu erhöhen.

Auf Basis der Ausrichtungsinformation steuert die Steuereinrichtung 6 geeignete Aktoren 5, d. h. im vorliegenden Fall z. B. das Antriebsaggregat sowie entsprechende höhenverstellbare Komponenten bestimmter, jeweiligen Fahrzeugrädern zugeordneter Stoßdämpfer an, um eine virtuelle Verschiebung der fahrtbedingt auftretenden Nickachse des Fahrgestells 2 zu erzielen. Mithin kann das Kraftfahrzeug 1 derart über eine Ansteuerung des Antriebsaggregats geringfügig beschleunigt werden, wobei in Summe selbstverständlich ein angesichts des bevorstehenden Hindernisses erforderliches Abbremsen des Kraftfahrzeugs 1 weiterhin gewährleistet ist, um eine Verschiebung der Nickachse herbeizuführen.

Gleichermaßen erfolgt eine Höhenverstellung des Fahrgestells 2 über eine Ansteuerung der Vorrichtungen zur Höhenverstellung der höhenverstellbaren Komponenten der Stoßdämpfer, z. B. auf der Fahrerseite des Kraftfahrzeugs 1, um die Wankbewegungen mit der Zielrichtung des Ausgleichs von auf die Fahrzeuginsassen wirkenden fahrtbedingt wirkenden Querkräfte überzukompensieren.

Dazu erfolgt gleichzeitig eine Ansteuerung anderer Vorrichtungen zur Höhenverstellung der höhenverstellbaren Komponenten weiterer Stoßdämpfer, um zusätzlich Hubbewegungen in das Fahrgestell 2 zu kompensieren, welche dazu dienen, sämtliche in das Fahrgestell 2 induzierten Bewegungen auszugleichen bzw. zu glätten und so für den oder die Fahrzeuginsassen kaum spürbar zu machen. Durch die simultan durchgeführten Hubbewegungen des Fahrgestells 2 ist es insbesondere auch möglich, etwaige Unebenheiten der Fahrbahnoberfläche auszugleichen.

Die Fig. 2 - 5 zeigen jeweils schematische Darstellungen eines Kraftfahrzeugs 1 gemäß einer beispielhaften Ausführungsform der Erfindung. Anhand der Fig. 2 - 5 wird veranschaulicht, welche jeweils durch die Ausrichtungsinformation beschriebenen Trajektorien T in Abhängigkeit unterschiedlicher Betriebsbedingungen bzw. Fahrsituationen des Kraftfahrzeugs 1 vorliegen können. Ausgehend von den Fig. 2 bis 4 sollen zunächst zwei exemplarische Fahrsituationen, des hier schematisch in einer perspektivischen Darstellung auf das Heck gezeigten Kraftfahrzeugs 1, dargestellt werden. Das Kraftfahrzeug 1 bewegt sich in Richtung des Pfeils 7. Das Fahrgestell 2 des Kraftfahrzeugs 1 wird als starrer Körper betrachtet.

Gemäß Fig. 2 bewegt sich das Kraftfahrzeug 1 gemäß Pfeil 7 auf ein Hindernis, wie z. B. eine auf Rot geschaltete Ampel, zu. Das Kraftfahrzeug 1 wird über den Fahrer oder ein Fahrerassistenzsystem zur Längsführung des Kraftfahrzeugs 1 abgebremst bzw. verzögert. Das ebenso schematisch dargestellte Fahrgestell 2 des Kraftfahrzeugs 1 senkt sich bedingt durch die Verzögerung vorne, d. h. im Bereich der Vorderachse, ab und hebt sich hinten, d. h. im Bereich der Hinterachse, an. Die Änderung der Ausrichtung des Fahrgestells 2 bezogen auf seine Neutrallage entspricht einer durch den Doppelpfeil 8 dargestellten Drehung des Fahrgestells 2 um die y-Achse in Richtung des Pfeils 7 und somit einer Nickbewegung des Fahrgestells 2 nach vorne.

Um einen Ausgleich der soeben beschriebenen Nickbewegung des Fahrgestells 2 zu realisieren, beschreibt die Ausrichtungsinformation eine Trajektorie T, um welche das Fahrgestell 2 durch Ansteuerung entsprechender Aktoren 5 gedreht werden muss, um die verzögerungsbedingt auf die Fahrzeuginsassen wirkenden Längskräfte auszugleichen. Entsprechend muss eine Drehung des Fahrgestells 2 ebenso um die y-Achse entgegen der Richtung des Doppelpfeils 8 in dem Pfeil 7 entgegen gesetzter Richtung bewirkt werden. In das Fahrgestell 2 muss eine der durch die Verzögerung bedingten Nickbewegung entgegen gesetzte Nickbewegung induziert werden. Dies kann beispielsweise durch eine geeignete Verstellung des Federfußpunktes der vorderachsenseitigen Stoßdämpfer nach oben bewirkt werden, so dass sich das Kraftfahrzeug 1 im Bereich der Vorderachse hebt. Die durch die Ausrichtungsinformation beschriebene Drehung des Fahrgestells 2 entspricht betragsmäßig nicht der durch die Verzögerung bedingten Drehung des Fahrgestells 2, sondern übersteigt diese. Hierbei liegt die durch die Ausrichtungsinformation beschriebene Trajektorie T genau innerhalb der y-Achse bzw. fällt mit dieser zusammen. Die vertikale Lage der y-Achse ist hier beispielsweise die Bauchhöhe eines Fahrzeuginsassen.

In Abhängigkeit der jeweiligen Zieleinstellung, welche, wie erwähnt, z. B. eine auf dem Ausgleich von auf die Fahrzeuginsassen wirkenden Längs- und/oder Querkräften beruhende Erhöhung des Fahrzeuginsassenkomforts, betrifft, kann die Trajektorie T, auch eine andere vertikale Lage oberhalb der y-Achse haben, d. h. in Richtung der z-Achse relativ zu dem in dem Schwerpunkt des Kraftfahrzeugs 1 liegenden Ursprung des Koordinatensystems verschoben sein und derart beispielsweise im Bereich des Kopfs eines Fahrzeuginsassen liegen (vgl. Fig. 3). Um dies mittels der Aktoren 5 zu realisieren, ist beispielsweise eine Ansteuerung des Antriebsaggregats denkbar, welches eine zwischenzeitliche, kurze Beschleunigung des Kraftfahrzeugs 1 ausführt, aufgrund welcher sich das Fahrgestell 2 im Bereich der Vorderachse hebt.

Es ist in diesem Zusammenhang anzumerken, dass die durch die Ausrichtungsinformation beschriebene Trajektorie T nicht zwingend innerhalb des Fahrgestells 2 liegen muss. Die Trajektorie T kann auch in Randbereichen des Kraftfahrzeugs 1, d.h.z. B. innerhalb einer vorderen oder hinteren Stoßstange oder sogar ganz außerhalb, d. h. z. B. um einen bestimmten Abstand hinter dem Kraftfahrzeug 1 liegend, liegen (vgl. Fig. 3).

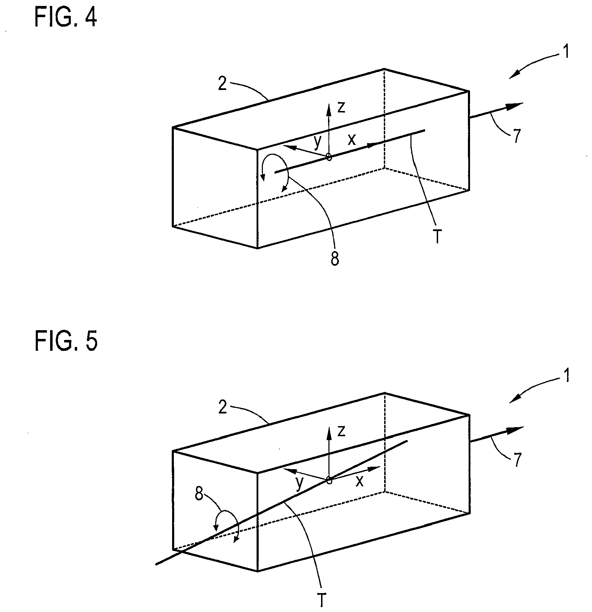

Gemäß Fig. 4 bewegt sich das Kraftfahrzeug 1 in der durch den Pfeil 7 angedeuteten Fahrtrichtung durch eine Linkskurve. Durch die auf das bewegte Kraftfahrzeug 1 wirkenden Zentripetalkräfte neigt sich das als starrer Körper betrachtete Fahrgestell 2 nach Außen, was einer Drehung des Fahrgestells 2 um die x-Achse und somit einer Wankbewegung gleich kommt. Entsprechend wird auf Basis der Ausrichtungsinformation eine in der x-Achse liegende Trajektorie T ermittelt und über eine Ansteuerung entsprechender Aktoren 5 die fahrtbedingt auftretende Drehachse des Fahrgestells 2 derart verschoben, dass diese mit der Trajektorie T zusammenfällt. Entsprechend wird eine Drehung des Fahrgestells 2 nach links (vgl. Doppelpfeil 8) derart bewirkt, um die durch die Zentripetalkräfte bedingte Neigung des Kraftfahrzeugs 1 nach außen durch eine Drehung des Fahrgestells 2 um die x-Achse nach links überzukompensieren, d. h. die durch die Verschiebung der Achse bedingte Wankbewegung des Fahrgestells 2 ist größer als die ursprüngliche fahrtbedingt auftretende Wankbewegung. Hierfür, d. h. um eine entsprechende Verschiebung der Wankachse zu realisieren, können beispielsweise beifahrerseitig angeordnete Aktoren 5 zur Höhenverstellung des Fahrgestells 2, d. h. insbesondere eine Federfußpunkthöhenverstellung der beifahrerseitig angeordneten Stoßdämpfer, angesteuert werden.

Die hiermit erreichbare Reduzierung der auf die Fahrzeuginsassen wirkenden Längs- und Querkräfte muss anteilsmäßig nicht gleich sein, so dass z. B. die auf die Fahrzeuginsassen wirkenden Längskräfte stärker reduziert werden als die auf die Fahrzeuginsassen wirkenden Querkräfte oder umgekehrt.

Fig. 5 zeigt eine Darstellung anhand welcher sich das erfindungsgemäße Prinzip besonders deutlich anschaulich erläutern lässt. Das Kraftfahrzeug 1 befindet sich in einer aus den in den vorherigen Fig. 2 - 4 dargestellten, kombinierten Fahrsituation. Das Kraftfahrzeug 1 bewegt sich also in einer Linkskurve auf ein Hindernis, wie z. B. eine auf Rot geschaltete Ampel, zu. Mithin erfährt das Fahrgestell 2 bedingt durch die Kurvenfahrt eine Neigung um die x-Achse nach Außen, d. h. eine Wankbewegung, und bedingt durch die Verzögerung angesichts des vor dem Kraftfahrzeug 1 liegenden Hindernisses eine Neigung um die y-Achse nach vorne, d. h. eine Nickbewegung.

Die resultierende, von der Ausrichtungsinformation beschriebene Trajektorie T ist entsprechend durch eine Addition bzw. Kombination der in den Fig. 2 - 4 gezeigten Trajektorien T gebildet und verläuft schräg durch das Fahrgestell 2.

Die Trajektorie T umfasst demnach einen Anteil, um die durch die Kurvenfahrt bedingte Wankbewegung des Fahrgestells 2 überzukompensieren, sowie einen Anteil, um die durch die Verzögerung bedingte Nickbewegung überzukompensieren. Mit anderen Worten wird über eine Ansteuerung entsprechender Aktoren 5 eine gezielte (virtuelle) Verschiebung der fahrbedingt auftretenden Drehachsen des Fahrgestells 2 realisiert, so dass sich das Fahrgestell 2 um die Trajektorie T dreht, was zu einer Überkompensation der durch die Kurvenfahrt und Verzögerung bedingten Wank- und Nickbewegungen des Fahrgestells 2 führt. Auf Basis der Ausrichtungsinformation werden Steuerbefehle an geeignete Aktoren 5 ermittelt, über welche sonach z. B. auf der Seite des Beifahrers eine Höhenverstellung der Federfußpunkte der Stoßdämpfer erfolgt. Um die durch die Kurvenfahrt bedingten Wankbewegungen des Fahrgestells 2 über eine entsprechende aktive Verschiebung der Drehachsen überzukompensieren, d. h. betragsmäßig zu übertreffen, kann auf Grundlage der Ausrichtungsinformation über die Ansteuerung von mit dem Lenkrad zusammenwirkender Aktoren 5 auch ein gezielter Lenkeingriff in entsprechend entgegen gesetzter Richtung realisiert werden. Selbstverständlich ist der Lenkeingriff derart, dass das Kraftfahrzeug 1 nicht von der Fahrbahn abkommt und seine Fahrspur einhält. Dies kann z. B. über gleichermaßen aktive, geeignete Fahrerassistenzsysteme zur Querführung sichergestellt werden.

Gleichzeitig kann das Antriebsaggregat aktiv angesteuert werden, um die genannte Verschiebung der fahrtbedingt vorliegenden Drehachsen bzw. Drehbewegungen des Fahrgestells 2 überzukompensieren, was alternativ oder zusätzlich ebenso durch eine zu einer Anhebung des Fahrgestells 2 im Bereich der Vorderachse führenden Federfußpunktverstellung der der Vorderachse zugehörigen Stoßdämpfer herbeigeführt werden kann.

Das Kraftfahrzeug 1 bzw. das Fahrgestell 2 erfährt also auf Grundlage der durch die Steuereinrichtung 6 ermittelten Ausrichtungsinformation und der darauf basierenden gezielten Ansteuerung kraftfahrzeugseitiger Aktoren 5, gezielt eingebrachte kombinierte Nick-, Wank- und Hubbewegungen, d. h. Drehbewegungen um die Trajektorie T, welche auf einer virtuellen Verschiebung der eigentlichen fahrtbedingt auftretenden Drehachse des Fahrgestells 2 entsprechend der Ausrichtungsinformation in x- und y-Achse sowie z-Achse basiert. Das Fahrgestell 2 ist auf Basis der Ausrichtungsinformation demnach in einer großen Anzahl an Freiheitsgraden bewegbar, um die durch die aktuelle Fahrsituation bedingten, in das Fahrgestell 2 eingebrachten Bewegungen im Hinblick auf die Zieleinstellung, welche insbesondere eine eine Erhöhung des Fahrzeuginsassenkomforts durch einen gezielten Ausgleich der auf die Fahrzeuginsassen wirkenden Längs- und Querkräfte unter den Ist-Betriebsbedingungen des Kraftfahrzeugs 1 betreffende Ausrichtung des Fahrgestells 2 beschreibt, überzukompensieren.

## Patentansprüche

1. Kraftfahrzeug (1), umfassend mehrere Aktoren (5) zur Ausführung von Bewegungen des Fahrgestells (2), umfassend eine Steuereinrichtung (6) zur Ermittlung einer eine im Hinblick auf wenigstens eine Zieleinstellung vorzunehmende Ausrichtung des Fahrgestells (2) beschreibenden Ausrichtungsinformation, wobei die Steuereinrichtung (6) auf Grundlage der Ausrichtungsinformation derart zur Ansteuerung der Aktoren (5) ausgebildet ist, dass die Aktoren (5) kombiniert Nick-, Wank- und Hubbewegungen des Fahrgestells (2) ausführen, um das Fahrgestell entsprechend der durch die Ausrichtungsinformation beschriebenen Ausrichtung auszurichten,
**dadurch gekennzeichnet,**
**dass** die Aktoren (5) zur Ansteuerung wenigstens eines Antriebsaggregats und/oder zur Ansteuerung wenigstens einer Bremsvorrichtung und/oder zur Ansteuerung wenigstens einer Lenkeinrichtung und/oder zur Ansteuerung wenigstens eines Fahrerassistenzsystems zur Längs- und/oder Querführung ausgebildet sind.

2. Kraftfahrzeug nach Anspruch 1,
**dadurch gekennzeichnet,**
**dass** die Ausrichtungsinformation eine Trajektorie (T), um die das Fahrgestell (2) bewegt werden muss, um die vorzunehmende Ausrichtung einzunehmen, sowie Nick-, Wank und Hubbewegungen um die Trajektorie (T) betreffende Steuerbefehle an die Aktoren (5), welche notwendig sind, um das Fahrgestell (2) um die Trajektorie (T) in die vorzunehmende Ausrichtung zu bewegen, beschreibt.

3. Kraftfahrzeug nach Anspruch 1 oder 2,
**dadurch gekennzeichnet,**
**dass** die Steuereinrichtung (6) dazu ausgebildet ist, in die Ermittlung der Ausrichtungsinformation eine Ist-Ausrichtung des Fahrgestells (2) einzubeziehen.

4. Kraftfahrzeug nach einem der vorangehenden Ansprüche,
**dadurch gekennzeichnet,**
**dass** die Steuereinrichtung (6) dazu ausgebildet ist, in die Ermittlung der Ausrichtungsinformation Ist-Beschleunigungswerte des Kraftfahrzeugs (1), insbesondere in Längs-, Quer- oder Hubrichtung, Lenkradwinkel sowie Gierwinkel einzubeziehen.

5. Kraftfahrzeug nach einem der vorangehenden Ansprüche,
**dadurch gekennzeichnet,**
**dass** die Zieleinstellung eine eine Erhöhung des Fahrzeuginsassenkomforts unter den Ist-Betriebsbedingungen des Kraftfahrzeugs (1) betreffende Ausrichtung des Fahrgestells (2) beschreibt.

6. Kraftfahrzeug nach Anspruch 5,
**dadurch gekennzeichnet,**
**dass** die Zieleinstellung einen Ausgleich oder zumindest eine Reduzierung der auf die Fahrzeuginsassen fahrtbedingt wirkenden Längs- und/oder Querkräfte beschreibt.

7. Verfahren zur kombinierten Ausführung von Bewegungen eines Fahrgestells (2) eines Kraftfahrzeugs (1), wobei eine im Hinblick auf wenigstens eine Zieleinstellung vorzunehmende Ausrichtung des Fahrgestells (2) beschreibende Ausrichtungsinformation ermittelt wird, wobei auf Grundlage der Ausrichtungsinformation Aktoren (5) zur Ausführung von Nick-, Wank- und Hubbewegungen des Fahrgestells (2) derart angesteuert werden, dass die Aktoren (5) kombiniert Nick-, Wank- und Hubbewegungen des Fahrgestells (2) ausführen, um das Fahrgestell (2) entsprechend der durch die Ausrichtungsinformation beschriebenen Ausrichtung auszurichten,
**dadurch gekennzeichnet,**
**dass** Aktoren (5) zur Ansteuerung wenigstens eines Antriebsaggregats und/oder zur Ansteuerung wenigstens einer Bremsvorrichtung und/oder zur Ansteuerung wenigstens einer Lenkeinrichtung und/oder zur Ansteuerung wenigstens eines Fahrerassistenzsystems zur Längs- und/oder Querführung verwendet werden.

8. Verfahren nach Anspruch 7,
**dadurch gekennzeichnet,**
**dass** eine ermittelte Ausrichtungsinformation verwendet wird, welche eine Trajektorie (T), um die das Fahrgestell (2) bewegt werden muss, um die vorzunehmende Ausrichtung einzunehmen, sowie Nick-, Wank und Hubbewegungen um die Trajektorie (T) betreffende Steuerbefehle an die Aktoren (5), welche notwendig sind, um das Fahrgestell (2) um die Trajektorie (T) in die vorzunehmende Ausrichtung zu bewegen, beschreibt.

9. Verfahren nach Anspruch 7 oder 8,
**dadurch gekennzeichnet,**
**dass** in die Ermittlung der Ausrichtungsinformation eine Ist-Ausrichtung des Fahrgestells (2) einbezogen wird.

10. Verfahren nach einem der Ansprüche 7 bis 9,
**dadurch gekennzeichnet,**
**dass** in die Ermittlung der Ausrichtungsinformation Ist-Beschleunigungswerte des Kraftfahrzeugs (1), insbesondere in Längs-, Quer- oder Hubrichtung, Lenkradwinkel, Gierwinkel einbezogen werden.

11. Verfahren nach einem der Ansprüche 7 bis 10,
**dadurch gekennzeichnet,**
**dass** eine Zieleinstellung verwendet wird, die eine eine Erhöhung des Fahrzeuginsassenkomforts unter den Ist-Betriebsbedingungen des Kraftfahrzeugs (1) betreffende Ausrichtung des Fahrgestells (2) beschreibt.

12. Verfahren nach Anspruch 11,
**dadurch gekennzeichnet,**
**dass** eine Zieleinstellung verwendet wird, die einen Ausgleich oder zumindest eine Reduzierung der auf die Fahrzeuginsassen fahrtbedingt wirkenden Längs-und/oder Querkräfte beschreibt.

## Claims

1. Motor vehicle (1) comprising a plurality of actuators (5) for carrying out movements of the chassis (2), comprising a control device (6) for detecting an alignment information describing an alignment, to be carried out in respect of at least one target adjustment, of the chassis (2), wherein the control device (6) on the basis of the alignment information is configured for controlling the actuators (5) in such a manner, that the actuators (5) carry out in a combined manner pitching, rolling and lifting movements of the chassis (2), in order to align the chassis according to the alignment described by the alignment information,
**characterised in**
**that** the actuators (5) are designed to control at least one drive assembly and/or to control at least one braking device and/or to control at least one steering device and/or to control at least one driver assistance system for longitudinal guidance and/or transverse guidance.

2. Motor vehicle according to claim 1,
**characterised in**
**that** the alignment information describes a trajectory (T) about which the chassis (2) needs to be moved in order to assume the alignment to be carried out, as well as control commands to the actuators (5) concerning pitching, rolling and lifting movements about the trajectory (T), which control commands are necessary in order to move the chassis (2) about the trajectory (T) into the alignment to be carried out.

3. Motor vehicle according to claim 1 or 2,
**characterised in**
**that** the control device (6) is configured to include an actual alignment of the chassis (2) into the detection of the alignment information.

4. Motor vehicle according to any of the preceding claims,
**characterised in**
**that** the control device (6) is configured to include actual acceleration values of the motor vehicle (1), in particular in longitudinal, transverse or lifting direction, steering wheel angles and yaw angles into the detection of the alignment information.

5. Motor vehicle according to any of the preceding claims,
**characterised in**
**that** the target setting describes an alignment, concerning an increase in the comfort of the vehicle occupants under the actual operating conditions of the motor vehicle (1), of the chassis (2).

6. Motor vehicle according to claim 5,
**characterised in**
**that** the target setting describes a compensation of or at least a reduction in the longitudinal and/or transverse forces caused by the journey acting upon the vehicle occupants.

7. Method for the combined carrying-out of movements of a chassis (2) of the motor vehicle (1), wherein alignment information describing an alignment, to be carried out in respect of at least one target adjustment, of the chassis (2) is detected, wherein on the basis of the alignment information actuators (5) for carrying out pitching, rolling and lifting movements of the chassis (2) are controlled such that the actuators (5) carry out in a combined manner pitching, rolling and lifting movements of the chassis (2), in order to align the chassis (2) according to the alignment described by the alignment information,
**characterised in**
**that** actuators (5) are used to control at least one drive assembly and/or to control at least one braking device and/or to control at least one steering device and/or to control at least one driver assistance system for longitudinal guidance and/or transverse guidance.

8. Motor vehicle according to claim 7,
**characterised in**
**that** a detected alignment information is used which describes a trajectory (T) about which the chassis (2) needs to be moved in order to assume the alignment to be carried out, as well as control commands to the actuators (5) concerning pitching, rolling and lifting movements about the trajectory (T), which control commands are necessary in order to move the chassis (2) about the trajectory (T) into the alignment to be carried out.

9. Motor vehicle according to claim 7 or 8,
**characterised in**
**that** an actual alignment of the chassis (2) is included into the detection of the alignment information.

10. Motor vehicle according to any of claims 7 to 9,
**characterised in**
**that** actual acceleration values of the motor vehicle (1), in particular in longitudinal, transverse or lifting direction, steering wheel angles and yaw angles are included into the detection of the alignment information.

11. Motor vehicle according to any of claims 7 to 10,
**characterised in**
**that** a target setting is used, which describes an alignment, concerning an increase in the comfort of the vehicle occupants under the actual operating conditions of the motor vehicle (1), of the chassis (2).

12. Motor vehicle according to claim 11,
**characterised in**
**that** a target setting is used, which describes a compensation of or at least a reduction in the longitudinal and/or transverse forces caused by the journey acting upon the vehicle occupants.

## Revendications

1. Véhicule automobile (1) comprenant plusieurs actionneurs (5) pour la réalisation de mouvements du châssis (2), comprenant un dispositif de commande (6) pour la détermination d'une information d'orientation décrivant une orientation à entreprendre en ce qui concerne au moins un réglage cible du châssis (2), dans lequel le dispositif de commande (6) est réalisé sur la base de l'information d'orientation pour la commande des actionneurs (5) de telle manière que les actionneurs (5) réalisent de manière combinée des mouvements de tangage, de roulis et de levage du châssis (2) afin d'orienter le châssis selon l'orientation décrite par l'information d'orientation,
**caractérisé en ce**
**que** les actionneurs (5) sont réalisés pour la commande d'au moins un groupe d'entraînement et/ou pour la commande d'au moins un dispositif de freinage et/ou pour la commande d'au moins un dispositif de direction et/ou pour la commande d'au moins un système d'assistance au conducteur pour le guidage longitudinal et/ou transversal.

2. Véhicule automobile selon la revendication 1,
**caractérisé en ce**
**que** l'information d'orientation décrit une trajectoire (T) autour de laquelle le châssis (2) doit être déplacé afin d'occuper l'orientation à entreprendre, ainsi que des ordres de commande concernant des mouvements de tangage, de roulis et de levage autour de la trajectoire (T) aux actionneurs (5) qui sont nécessaires afin de déplacer le châssis (2) autour de la trajectoire (T) dans l'orientation à entreprendre.

3. Véhicule automobile selon la revendication 1 ou 2,
**caractérisé en ce**
**que** le dispositif de commande (6) est réalisé afin d'intégrer dans la détermination de l'information d'orientation une orientation réelle du châssis (2).

4. Véhicule automobile selon l'une quelconque des revendications précédentes,
**caractérisé en ce**
**que** le dispositif de commande (6) est réalisé afin d'intégrer dans la détermination de l'information d'orientation des valeurs d'accélération réelles du véhicule automobile (1), en particulier dans le sens longitudinal, transversal ou de levage, des angle de roue de direction ainsi que des angles de lacet.

5. Véhicule automobile selon l'une quelconque des revendications précédentes,
**caractérisé en ce**
**que** le réglage cible décrit une orientation concernant une augmentation du confort de passagers de véhicule dans les conditions de fonctionnement réelles du véhicule automobile (1) du châssis (2).

6. Véhicule automobile selon la revendication 5,
**caractérisé en ce**
**que** le réglage cible décrit une compensation ou au moins une réduction des forces longitudinales et/ou transversales agissant en raison du déplacement sur les passagers de véhicule.

7. Procédé de réalisation combinée de mouvements d'un châssis (2) d'un véhicule automobile (1), dans lequel une information d'orientation décrivant une orientation à entreprendre en ce qui concerne au moins un réglage cible du châssis (2) est déterminée, dans lequel sur la base de l'information d'orientation des actionneurs (5) sont commandés pour la réalisation de mouvements de tangage, de roulis et de levage du châssis (2) de telle manière que les actionneurs (5) réalisent de manière combinée des mouvements de tangage, de roulis, et de levage du châssis (2) afin d'orienter le châssis (2) selon l'orientation décrite par l'information d'orientation,
**caractérisé en ce**
**que** des actionneurs (5) sont utilisés pour la commande d'au moins un groupe d'entraînement et/ou pour la commande d'au moins un dispositif de freinage et/ou pour la commande d'au moins un dispositif de direction et/ou pour la commande d'au moins un système d'assistance au conducteur pour le guidage longitudinal et/ou transversal.

8. Procédé selon la revendication 7,
**caractérisé en ce**
**qu'**une information d'orientation déterminée est utilisée, laquelle décrit une trajectoire (T) autour de laquelle le châssis (2) doit être déplacé afin d'occuper l'orientation à entreprendre, ainsi que des ordres de commande concernant des mouvements de tangage, de roulis et de levage autour de la trajectoire (T) aux actionneurs (5) qui sont nécessaires afin de déplacer le châssis (2) autour de la trajectoire (T) dans l'orientation à entreprendre.

9. Procédé selon la revendication 7 ou 8,
**caractérisé en ce**
**qu'**une orientation réelle du châssis (2) est intégrée dans la détermination de l'information d'orientation.

10. Procédé selon l'une quelconque des revendications 7 à 9,
**caractérisé en ce**
**que** dans la détermination de l'information d'orientation des valeurs d'accélération réelles du véhicule automobile (1), en particulier dans le sens longitudinal, transversal ou de levage, des angles de roue de direction, des angles de lacet sont intégrés.

11. Procédé selon l'une quelconque des revendications 7 à 10,
**caractérisé en ce**
**qu'**un réglage cible est utilisé, lequel décrit une orientation concernant une augmentation du confort de passagers de véhicule dans les conditions de fonctionnement réelles du véhicule automobile (1) du châssis (2).

12. Procédé selon la revendication 11,
**caractérisé en ce**
**qu'**un réglage cible est utilisé, lequel décrit une compensation ou au moins une réduction des forces longitudinales et/ou transversales agissant en raison du déplacement sur les passagers de véhicule.
